# EUROPEAN PATENT APPLICATION

(11) **EP 4 213 113 A1**
(43) Date of publication of application: **19.07.2023**
(21) Application number: 22151599.2
(22) Date of filing: 14.01.2022
(51) Int. Cl.: G06V 20/58

(54) **A SCHEME FOR MONITORING AN OBJECT LOADED ON A CARRIER OF A VEHICLE**

(71) Applicant: Alps Alpine Co., Ltd., Ota-ku Tokyo 145-8501 (JP)
(72) Inventor: MOLDENHAUER, Ingo, Leinfelden-Echterdingen (DE)
(74) Representative: Schmitt-Nilson Schraud Waibel Wohlfrom Patentanwälte Partnerschaft mbB

(57) **Abstract**

A method of monitoring, by a data processing device comprising a processor, an object loaded on a carrier of a vehicle is provided. The method comprises obtaining a plurality of image frames of a road on which the vehicle is travelling, captured by at least one camera mounted at a rear portion of the vehicle at different points of time; selecting a first image frame and at least one second image frame among the plurality of image frames such that the first image frame and the at least one second image frame have a first image section and at least one second image section, respectively, containing an image of the same part of the road; comparing the first image section and the at least one second image section; and determining if the object has dropped down on the road based on the comparison result.

## Description

The present invention relates to a method and an apparatus for monitoring an object loaded on a carrier of a vehicle, a vehicle equipped with the apparatus, and a computer program product.

Most vehicles like a bicycle, a motorcycle, a car, and a boat have carriers for loading objects like luggages thereon. While driving a vehicle, it is not easy for a driver to pay close attention to an object loaded on its carrier all the time. Thus, it may sometimes happen for the object to drop down from the carrier to the road on which the vehicle is travelling without the driver's recognising it.

Accordingly, it would be beneficial to provide an enhanced method and apparatus for monitoring an object loaded on a carrier of a vehicle and to provide a vehicle equipped with the apparatus and a computer program product therefor.

Exemplary embodiments of the invention include a method of monitoring, by a data processing device comprising a processor, an object loaded on a carrier of a vehicle, the method comprising obtaining a plurality of image frames of a road on which the vehicle is travelling, captured by at least one camera mounted at a rear portion of the vehicle at different points of time; selecting a first image frame and at least one second image frame such that the first image frame and the at least one second image frame have a first image section and at least one second image section, respectively, containing an image of the same part of the road; comparing the first image section and the at least one second image section; and determining if the object has dropped down on the road based on the comparison result. In an embodiment, it is determined that the object has dropped down on the road when at least one difference between the first image section and the at least one second image section is detected.

At least one camera mounted at a rear portion of the vehicle may capture a plurality of image frames each having an image of the road which the vehicle has already passed and/or is about to pass at different points of time. In this document, the term "image frame" may be either a "still image" which is a single static image or a "still frame" which is a still image derived from one frame of a moving image such as a video. Likewise, the at least one camera may be a photographic camera or a video camera. A first image frame and at least one second image frame are selected such that the first image frame and the at least one second image frame, captured at different points of time while the vehicle is travelling on the road, share at least part of an image section containing an image of the same part of the road. Here, an image section may be either part of a single image frame or a whole image frame. The image sections of the first image frame and the at least one second image frame, which have an image of the same part of the road, are compared each other to determine if there is at least one difference between them. It may be determined that the object has dropped down on the road when at least one difference between the first image section and the at least one second image section is detected. In this way, whether or not an object has dropped down from the vehicle to the road can be monitored in an efficient manner without using a precise image recognition technology.

According to a further embodiment, selecting the first image frame and the at least one second image frame comprises obtaining a speed of the vehicle and selecting the first image frame and the at least one second image frame among the plurality of image frames based on the speed of the vehicle. When the plurality of image frames are captured by a camera mounted at a certain rear portion of the vehicle so as to capture images of the road which the vehicle has already passed, each image frame contains an image covering a fixed amount of distance of the road. A capturing speed of the at least one camera capturing image frames may be a known value. In this regard, it is possible for the first image frame and the at least one second image frame to be selected such that they share at least part of an image section containing an image of the same part of the road. The speed of the vehicle may be measured in a conventional manner.

According to a further embodiment, selecting the first image frame and the at least one second image frame comprises obtaining a speed of the vehicle and controlling a capturing speed of the camera capturing image frames based on the obtained speed such that the first image frame and the at least one second image frame are subsequent image frames. Since the speed of the vehicle can be measured and the fixed distance of the road contained in each image frame is a known value, the capturing speed of the camera capturing image frames can be adapted in a way that the first image frame and the at least one second image frame are subsequent image frames sharing at least part of an image section containing an image of the same part of the road.

According to a further embodiment, when the first image frame and the at least one second image frame contain an image of at least part of the vehicle, the method further comprises removing the image of the at least part of the vehicle from the first image frame and the at least one second image frame. If the image frames contain an image of at least part of the vehicle, quality of the comparison of the image frames may be deteriorated by the image of at least part of the vehicle. In this regard, by removing the image of at least part of the vehicle, the quality of the comparison can be enhanced.

According to a further embodiment, when the first image frame and the at least one second image frame contain an image of at least part of the vehicle, the first image section and the at least one second image section are compared without considering the image of the at least part of the vehicle. Since the processor may have prior knowledge about the image of the at least part of the vehicle contained in each image frame, the image of the at least part of the vehicle can be simply disregarded when comparing the first image section and the at least one second image section to enhance the quality of the comparison. A self learning algorithm may be used for the processor to obtain the knowledge about the image of the at least part of the vehicle contained in each image frame.

According to a further embodiment, the plurality of image frames are captured by a single camera and each image frame has a plurality of image sections which result from virtually partitioning each image frame.

According to a further embodiment, each of the plurality of image frames has N number of image sections from a first image section to an Nₜₕ image section, a lower-ranked image section containing an image of part of the road which the vehicle has passed earlier, wherein M number of image frames are selected among the plurality of image frames such that second to Nₜₕ image sections of the first image frame and first image sections of the second to Mₜₕ image frames contain an image of the same part of the road, respectively, wherein M is greater than two and is equal to or less than N, and wherein the second to the Nₜₕ image sections of the first image frame are compared with the first image sections of the second to Mₜₕ image frames, respectively, wherein a higher-ranked image frame means being captured at an earlier point of time. In this way, a broader area of the road can be monitored to check if the object has dropped down from the carrier of the vehicle to the road. Here, regarding the terms "lower-ranked" and "higher ranked", for example, a first image section is "lower-ranked" than second, third, ..., and the Nₜₕ image sections, while the Mₜₕ image frame is "higher-ranked" than the (M-1)ₜₕ, (M-2)ₜₕ, ..., and first image frame.

According to a further embodiment, the first image frame and the at least one second image frame are captured by separate cameras, respectively. A plurality of cameras may be mounted at the rear portion of the vehicle such that the plurality of cameras can capture a plurality of image frames having an image of the same part of the road captured at different points of time while the vehicle is travelling on the road.

Exemplary embodiments of the invention further include an apparatus for monitoring an object loaded on a carrier of a vehicle, the apparatus comprising at least one camera mountable at a rear portion of the vehicle so as to capture a plurality of image frames of a road on which the vehicle is travelling; a data processing device comprising a processor and configured to perform the method according any of the embodiments as discussed herein; and means for giving a warning when it is determined that the object has dropped down on the road.

According to a further embodiment, the warning is at least one of an auditory warning or a visual warning. In an embodiment, the means for giving the warning comprises at least one of a monitor for giving the visual warning and/or a speaker for giving the auditory warning.

Exemplary embodiments of the invention further include a vehicle equipped with the apparatus according to any of the embodiments discussed herein. In an embodiment, the vehicle is a bicycle, a motorcycle, a car or a boat. In case the vehicle is a boat, the term road means a sea road, a sea lane or a marine route.

Exemplary embodiments of the invention further include a computer program product comprising instructions which, when executed by a computer, cause the computer to carry out the method according to any of the embodiments as discussed herein.

Further exemplary embodiments of the invention are described with respect to the accompanying drawings, wherein:
Fig. 1A is a schematic diagram depicting a bicycle equipped with an apparatus in accordance with an embodiment of the invention;
Fig. 1B is a schematic top view depicting a road on which a bicycle equipped with an apparatus in accordance with an embodiment of the invention is travelling;
Fig. 2 is a block diagram depicting a configuration of an apparatus in accordance with an exemplary embodiment of the invention;
Fig. 3A is a flow chart depicting a process performed by a processor in accordance with an exemplary embodiment of the invention;
Fig. 3B is a schematic diagram for explaining an example of how to select first and second image frames by a processor in accordance with an exemplary embodiment of the invention;
Fig. 4A is a flow chart depicting a process performed by a processor in accordance with another exemplary embodiment of the invention;
Fig. 4B is a schematic diagram for explaining an example of how to select plurality of image frames and how to compare images sections of different image frames by a processor in accordance with another exemplary embodiment of the invention.
Fig. 5 is a schematic diagram depicting a car equipped with an apparatus in accordance with an embodiment of the invention.

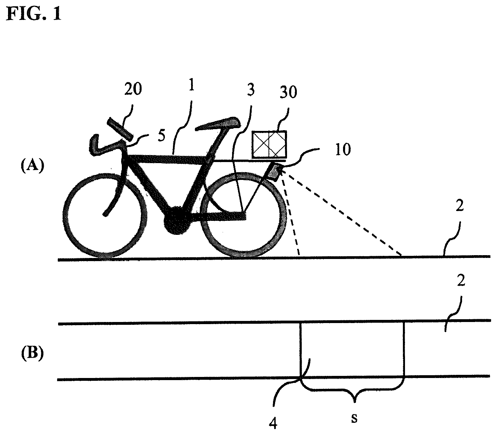

Fig. 1A shows a schematic diagram depicting a bicycle equipped with an apparatus in accordance with an embodiment of the invention.

Referring to Fig. 1A, a bicycle 1 has a rear carrier 3 for carrying an object 30 on it and the bicycle 1 is travelling on a road 2. The bicycle 1 is equipped with an apparatus according to an embodiment of the invention. The apparatus comprises a camera 10 and a data processing device 20. The camera 10 is mounted beneath the rear carrier 3 such that it may capture a plurality of image frames each containing an image of part of the road 2 which the bicycle 1 has already passed. It is to be noted that the camera 10 may be mounted at another part of the bicycle 1 in so far as it can take an image of part of the road which the bicycle 1 has already passed. The data processing device 20 is mounted on a handlebar 5 of the bicycle 1 and is configured to perform a process according to an embodiment of the invention as described herein. The apparatus comprising the camera 10 and the data processing device 20 will be discussed below in more detail.

Fig. 1B shows a schematic top view depicting the road 2 on which the bicycle 1 is travelling. The rectangular-shaped area 4 in Fig. 1B represents part of the road 2 contained in an image frame captured by the camera 10. Without changing a calibration and a location of the camera 10, all image frames captured by the camera 10 contain images covering the same distance of the road 2. That is, in Fig. 1B, the distance "s" is the same for all image frames unless the calibration and the location of the camera 10 is changed.

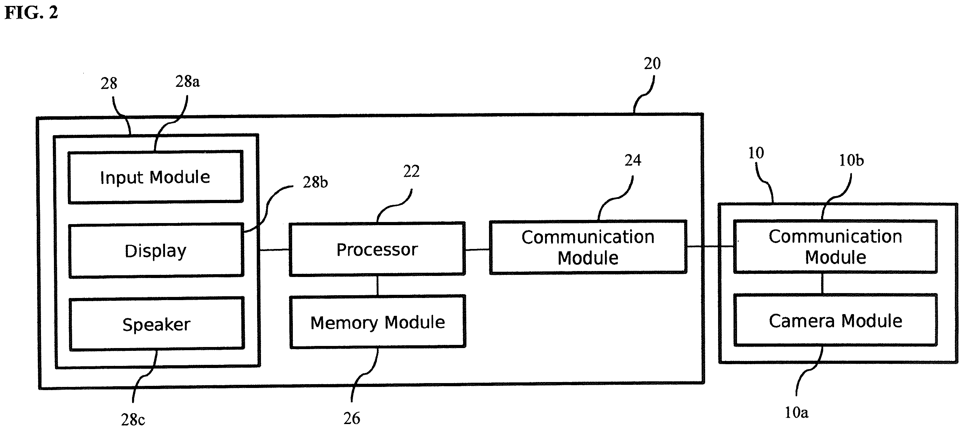

Fig. 2 shows a schematic block diagram depicting a configuration of the apparatus in accordance with an exemplary embodiment of the invention.

As described above, the apparatus comprises the camera 10 and the data processing device 20. The camera 10 comprises a camera module 10a and a communication module 10b. The data processing device 20 comprises a processor 22, a communication module 24, a memory module 26, and a user interface 28. The user interface 28 comprises an input module 28a, a display module 28b, and a speaker 28c. It is to be noted that a configuration of the apparatus as shown in Fig. 2 is exemplary. A different configuration may also be considered. For example, the processor 20, the communication module 24, the memory module 26, and the camera 10 may be integrated into a single entity which can be mounted beneath the rear carrier 10 of the bicycle 1. The user interface 28 may be mounted alone on the handlebar 5 of the bicycle 1.

In operation, before or while riding the bicycle 1, a bicycle rider (not shown) may input an instruction via the input module 28a for the apparatus to start monitoring the object 30 loaded on the rear carrier 3 of the bicycle 1. The instruction is sent to the camera 10 via the communication modules 24, 10 which may perform wired or wireless communication each other using a known communication technology. Upon receiving the instruction, the camera module 10a starts capturing image frames each containing an image of part of the road 2. The image frames may be captured by the camera module 10a at a constant speed which may be changed by a control of the processor 22 as necessary. The captured image frames are sent to the data processing device 20 via the communication modules 10, 24 and are stored into the memory module 26. The processor 22 performs a process according to an embodiment of the invention to determine if the object 30 has dropped down from the rear carrier 3 to the road 2. The process to be performed by the processor 22 will be discussed below in detail. When it is determined that the object 30 has dropped down on the road 2, the processor 20 instructs the user interface 28 to give a warning to the bicycle rider. The user interface 28 may give a visual warning, e.g. by displaying a warning sentence or picture on the display 28b. Alternatively, an auditory warning, e.g. an alarming sound, may be given via the speaker 28. Both the visual and auditory warning may also given through the monitor 28b and the speaker 28c at the same time.

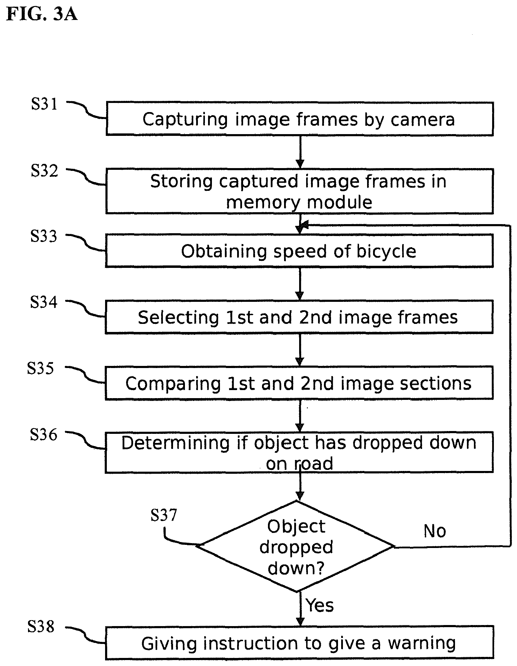

Fig. 3A is a flow chart depicting a process to be performed by the processor 22 in accordance with an exemplary embodiment of the invention.

Referring to Fig. 3A, as discussed above, the camera module 10a captures a plurality of image frames at S31, each containing an image of part of the road 2 which the bicycle 1 has already passed and the captured image frames are stored in the memory module 26 at S32. At S33, the processor 22 obtains a speed of the bicycle 1. The speed of the bicycle 1 may be measured in a conventional manner, e.g. using a speedometer or a GPS module (not shown).

At S34, the processor 22 selects a first image frame 4a and a second image frame 4b among the plurality of image frames stored in the memory module 26 such that the first image frame and the second image frame have image sections, respectively, containing an image of the same part of the road 2.

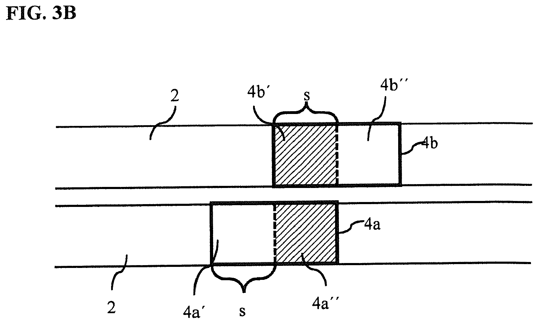

Fig. 3B is a schematic diagram for explaining an example of how to select the first and second image frames by the processor 22.

As discussed above with reference to Fig. 1B, the rectangular-shaped areas 4a, 4b in Fig. 3B represents part of the road 2 contained in the first image frame 4a and the second image frame 4b, respectively. Without changing a calibration and a location of the camera 10, all image frames captured by the camera 10 contain images covering the same distance of the road 2. That is, the distance "s" on the road 2 contained in all image frames captured by the camera 10 is the same. In Fig. 3B, the first and second image frames 4a, 4b are captured by the camera module 10a at a first point of time (t = t1) and at a second point of time (t = t2), respectively. There may be other image frames captured by the camera module 10a during the time period (Δt) between the first and second points of time. The processor 22 may have prior information about not only a capturing speed of the camera module 10a capturing the image frames, but also a time period between two subsequent points of time.

Each image frame captured by the camera module 10a has two image sections, i.e. a first image section and a second image section, which are virtually partitioned by the processor 22. Here, the lower-ranked image section, i.e. the first image section 4a', 4b', contains an image of part of the road 2 which the bicycle 1 has passed earlier than the higher-ranked image section, i.e. the second image section 4a", 4b". It is to be noted that each image frame having two image sections is exemplary and that the processor 22 may virtually partition each image frame into more than two image sections.

The processor 22 may select the first image frame 4a and the second image frame 4b among the plurality of image frames stored in the memory module 26 such that the first image frame 4a and the second image frame 4b have the second image section 4a" and the first image section 4b', respectively, containing an image of the same part of the road 2 which the bicycle 1 has already passed. It may be possible by calculating the time period (Δt) between the first and second points of time when the first and second image frames 4a, 4b are captured, respectively. In particular, the processor 22 may calculate the time period (Δt) between the first and second points of time using an equation Δt = s / v, wherein v is the speed of the bicycle 1. The speed (v) of the bicycle 1 may be an average speed during the time period (Δt) between the first and second points of time. Alternatively, the speed (v) may be an instantaneous speed measured at any point of time during the time period.

As an alternative embodiment for selecting the first and second image frames 4a, 4b, the processor 22 may control a capturing speed of the camera 10 capturing image frames based on the obtained speed of the bicycle 1 such that the first image frame 4a and the second image frame 4b are two subsequent image frames which have the second image section 4a" and the first image section 4b', respectively, containing an image of the same part of the road 2 which the bicycle 1 has already passed. In particular, based on the speed (v) of the bicycle 1 at the first point of time, the processor 22 may calculate the time period (Δt) using the equation Δt = s / v and thereafter the processor 22 may instruct the camera module 10a to capture the second image frame 4b.

At S35, the controller 22 compares the second image section 4a" of the first image frame 4a and the first image section 4b' of the second image frame 4b which contain an image of the same part of the road 2. At 36, the controller 22 determines if the object 30 has dropped down on the road 2 based on the comparison result. In particular, the processor 22 determines that the object 30 has dropped down on the road 2 when at least one difference between the second image section 4a" of the first image frame 4a and the first image section 4b' of the second image frame 4b is detected. Since the second image section 4a" of the first image frame 4a and the first image section 4b' of the second image frame 4b contain the image of the same part of the road 2 with a relatively short time difference, any difference between the two image sections 4a", 4b' can be easily detected, which may result in an easy detection of the object 30 if it has been fallen down on the road 2, without using a high-profile image recognition technology.

If the second image section 4a" of the first image frame 4a and the first image section 4b' of the second image frame 4b contain an image of at least part of the bicycle 1, e.g. part of the rear wheel, the processor 22 is configured to remove the image of the at least part of the bicycle 1 from the second image section 4a" of the first image frame 4a and the first image section 4b' of the second image frame 4b.

Alternatively, the second image section 4a" of the first image frame 4a and the first image section 4b' of the second image frame 4b contain an image of at least part of the bicycle 1, they may be compared without considering the image of the at least part of the bicycle 1. That is, since the processor 22 may have prior knowledge about the image of the at least part of the bicycle 1 contained in each image frame, the image of the at least part of the bicycle 1 may be simply disregarded when comparing the two image sections to enhance the quality of the comparison. A self learning algorithm may be used for the processor 22 to obtain the knowledge about the image of the at least part of the bicycle 1 contained in each image frame.

If it is determined that the object 30 has dropped down on the road 2 at S37, the processor 22 instructs the user interface 28 to give at least one of an auditory or visual warning via the display 28b and/or speaker 28c at S38. If it is determined that the object has not dropped down on the road, on the other hand, the process returns to the step of S33.

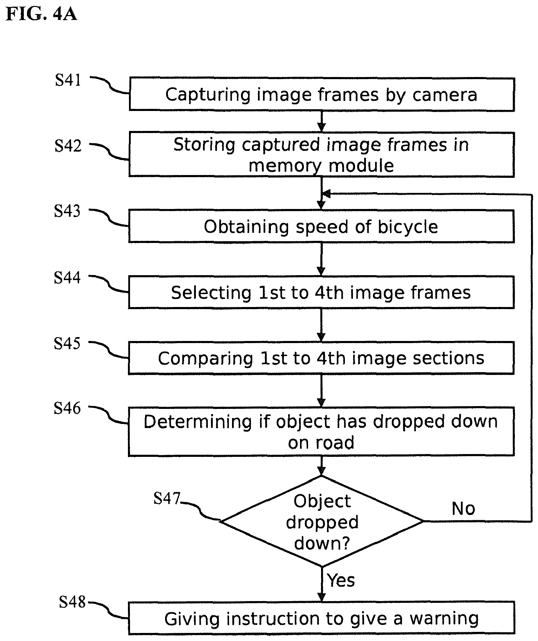

Fig. 4A is a flow chart depicting a process to be performed by the processor 22 in accordance with another exemplary embodiment of the invention.

The process of Fig. 4A is analogous to that of Fig. 3A other than the steps of S44 and S45 which relate to selecting a plurality image frames and comparing image sections of different image frames. Thus, the other steps of S41-S43 and S46-S48 will not be explained below in detail and reference can be made to the corresponding steps of Fig. 3A.

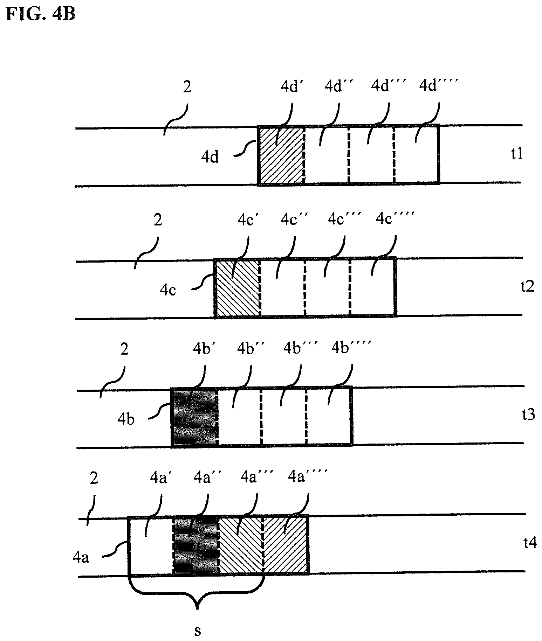

Fig. 4B is a schematic diagram for explaining an example of how to select the plurality of image frames and how to compare images sections of different image frames by the processor 22. In Figs. 4A and 4B, four image frames, i.e. first to fourth image frames 4a-4d are selected and each image frame is virtually partitioned into four image sections, i.e. first to fourth image sections.

Referring to Fig. 4B, the first to fourth image frames 4a-4d have been captured by the camera module 10a at four different points of time, i.e. at t4, t3, t2, and t1, respectively, among which t1 is the earliest point of time and t4 is the latest point of time. A time period between two subsequent points of time may be a constant value (Δt). The first to fourth image frames 4a-4d are selected such that the second to fourth image sections 4a"-4a"" of the first image frame 4a and the first image sections 4b'-4d' of the second to fourth image frames 4b-4d contain an image of the same part of the road 2, respectively. In particular, the second image section 4a" of the first image frame 4a and the first image section 4b' of the second image frame 4b contain an image of the same part of the road 2 with a time difference Δt. The third image section 4a'" of the first image frame 4a and the first image section 4c' of the third image frame 4c contain an image of the same part of the road 2 with a time difference 2 x Δt. The fourth image section 4a"" of the first image frame 4a and the first image section 4d' of the fourth image frame 4d contain an image of the same part of the road 2 with a time difference 3 x Δt.

The processor 22 may select the first to fourth image frames 4a-4d among the plurality of image frames stored in the memory module 26 using the speed of the bicycle 1 and the time period (Δt) between the two subsequent points of time. In particular, the processor 22 may calculate the time period (Δt) between the two subsequent points of time using an equation Δt = s / 3v, wherein v is the speed of the bicycle 1. The speed (v) of the bicycle 1 may be an average speed during the time period (3 x Δt) between the first and fourth points of time. Alternatively, the speed (v) may be an instantaneous speed measured at any point of time during the same time period.

As an alternative embodiment for selecting the first to fourth image frames 4a-4d, the processor 22 may control a capturing speed of the camera 10 capturing image frames based on the obtained speed of the bicycle 1 such that the first to fourth image frames 4a-4d are four subsequent image frames. In particular, based on the speed (v) of the bicycle 1 at the first point of time, the processor 22 may calculate the time period (Δt) between two subsequent points of time using the equation Δt = s / 3v and thereafter the processor 22 may instruct the camera module 10a to capture the second to fourth image frames 4b-4d with a time difference of Δt between two subsequent points of time.

At S45, the controller 22 compares the second image section 4a" of the first image frame 4a and the first image section 4b' of the second image frame 4b, the third image section 4a'" of the first image frame 4a and the first image section 4c' of the third image frame 4c, and the fourth image section 4a"" of the first image frame 4a and the first image section 4d' of the fourth image frame 4d. At 46, the controller 22 determines if the object 30 has dropped down on the road 2 based on the comparison result. In particular, the processor 22 determines that the object 30 has dropped down on the road 2 if there is at least one difference between the two image sections, i.e. the second image section 4a" of the first image frame 4a and the first image section 4b' of the second image frame 4b, the third image section4a"' of the first image frame 4a and the first image section 4c' of the third image frame 4c, and the fourth image section 4a"" of the first image frame 4a and the first image section 4d' of the fourth image frame 4d. Otherwise, it is determined by the processor 22 that the object 30 has not dropped down on the road 2. In this way, accuracy of the monitoring apparatus can be enhanced by expanding both the monitoring distance of the road and time span. It is to be noted that the number of the image frames and image sections in each image frame may be more than four.

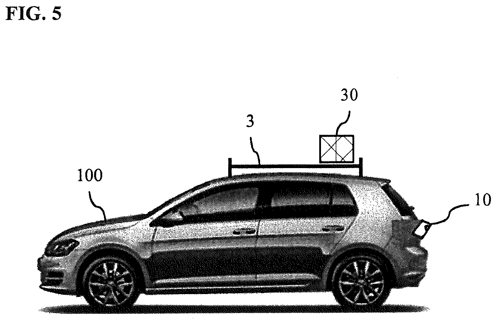

Fig. 5 shows a schematic diagram depicting a car equipped with an apparatus in accordance with an embodiment of the invention.

Referring to Fig. 5, a car 100 comprises a rooftop carrier 3 for carrying an object 30 on it. The car 100 is equipped with an apparatus according to an embodiment of the invention. The apparatus comprises a camera 10 and a data processing device (not shown). The camera 10 is mounted at a rear part of the car 100 such that it may capture a plurality of image frames each containing an image of part of a road which the car 100 has already passed. The data processing device may be integrated into a center console of the car 100 and is configured to perform a process according to an embodiment of the invention as described herein.

It is to be noted that an apparatus according to an embodiment of the invention may be combined with any vehicle having an outside carrier, such as a motorcycle with a rear carrier, a car with a rear carrier, and a boat with a rear carrier.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. A method of monitoring, by a data processing device comprising a processor, an object loaded on a carrier of a vehicle, the method comprising:
obtaining a plurality of image frames of a road on which the vehicle is travelling, captured by at least one camera mounted at a rear portion of the vehicle at different points of time;
selecting a first image frame and at least one second image frame such that the first image frame and the at least one second image frame have a first image section and at least one second image section, respectively, containing an image of the same part of the road;
comparing the first image section and the at least one second image section; and
determining if the object has dropped down on the road based on the comparison result.

2. The method of claim 1, wherein it is determined that the object has dropped down on the road when at least one difference between the first image section and the at least one second image section is detected.

3. The method of claim 1 or 2, wherein selecting the first image frame and the at least one second image frame comprises:
obtaining a speed of the vehicle; and
selecting the first image frame and the at least one second image frame among the plurality of image frames based on the speed of the vehicle.

4. The method of claim 1 or 2, wherein selecting the first image frame and the at least one second image frame comprises:
obtaining a speed of the vehicle; and
controlling a capturing speed of the camera capturing image frames based on the obtained speed such that the first image frame and the at least one second image frame are subsequent image frames.

5. The method of any of the preceding claims, when the first image frame and the at least one second image frame contain an image of at least part of the vehicle, further comprising removing the image of the at least part of the vehicle from the first image frame and the at least one second image frame.

6. The method of any of claims 1-4, wherein, when the first image frame and the at least one second image frame contain an image of at least part of the vehicle, the first image section and the at least one second image section are compared without considering the image of the at least part of the vehicle.

7. The method of any of the preceding claims, wherein the plurality of image frames are captured by a single camera and each image frame has a plurality of image sections.

8. The method of claim 7, wherein each of the plurality of image frames has N number of image sections from a first image section to an Nₜₕ image section, a lower-ranked image section containing an image of part of the road which the vehicle has passed earlier,
wherein M number of image frames are selected among the plurality of image frames such that second to Nₜₕ image sections of the first image frame and first image sections of the second to Mₜₕ image frames contain an image of the same part of the road, respectively, wherein M is greater than two and is equal to or less than N, and
wherein the second to the Nₜₕ image sections of the first image frame are compared with the first image sections of the second to Mₜₕ image frames, respectively, wherein a higher-ranked image frame means being captured at an earlier point of time.

9. The method of any of claims 1-6, wherein the first image frame and the at least one second image frame are captured by separate cameras, respectively.

10. An apparatus for monitoring an object loaded on a carrier of a vehicle, the apparatus comprising:
at least one camera mountable at a rear portion of the vehicle so as to capture a plurality of image frames of a road on which the vehicle is travelling;
a data processing device comprising a processor and configured to perform the method of any of claims 1-9; and
means for giving a warning when it is determined that the object has dropped down on the road.

11. The apparatus of claim 10, wherein the warning is at least one of an auditory warning or a visual warning.

12. The apparatus of claim 11, wherein the means for giving the warning comprises a monitor for giving the visual warning, particularly wherein the means for giving the warning comprises a speaker for giving the auditory warning.

13. A vehicle equipped with the apparatus of any of claims 10-12.

14. The vehicle of claim 13, wherein the vehicle is a bicycle, a motorcycle, a car or a boat.

15. A computer program product comprising instructions which, when executed by a computer, cause the computer to carry out the method according to any of claims 1-9.
